# FASCICULE DE BREVET EUROPEEN

(11) **EP 2 999 349 B1**
(45) Date de publication et mention de la délivrance du brevet: **14.06.2023**
(21) Numéro de dépôt: 14734859.3
(22) Date de dépôt: 21.05.2014
(51) Int. Cl.: A23C 19/028, A23C 19/05, A23C 19/055, A23C 19/068

(54) **PROCÉDÉ DE FABRICATION D'UN FROMAGE ET FROMAGE OBTENU**
VERFAHREN ZUR HERSTELLUNG VON KÄSE UND DARAUS ERHÄLTLICHER KÄSE
PROCESS FOR MAKING CHEESE AND CHEESE OBTAINABLE THEREBY

(30) Priorité: 21.05.2013 FR 1354517
(43) Date de publication de la demande: 30.03.2016
(73) Titulaire: Ingredia, 62000 Arras (FR)
(72) Inventeur: LESUR, Céline, 62580 Vimy (FR); DAVID, Franck, F-62217 Beaurains (FR); SNAPPE, Jean Jacques, F-62149 Festubert (FR)
(74) Mandataire: Cabinet Beau de Loménie
(86) Numéro de dépôt international: PCT/FR2014/051186
(87) Numéro de publication internationale: WO 2014/188123

(56) Documents cités:
- WO-A1-02/082917
- WO-A1-2004/057971
- WO-A1-2009/150183
- FR-A1- 2 875 107
- FR-A1- 2 911 044
- US-A- 4 460 609
- US-A- 4 919 943
- US-A- 5 431 931
- US-A1- 2005 238 783
- US-B1- 6 485 762
- Anonymous: "Mozzarella - Wikipedia, the free encyclopedia", , 27 janvier 2012 (2012-01-27), pages 1-7, XP055140762, Extrait de l'Internet: URL:https://web.archive.org/web/2012012721 4845/http://en.wikipedia.org/wiki/Mozzarel la [extrait le 2014-09-17]
- T.P. GUINEE ET AL: "Effect of pH and Calcium Concentration on Some Textural and Functional Properties of Mozzarella Cheese", JOURNAL OF DAIRY SCIENCE, vol. 85, no. 7, 2002, pages 1655-1669, XP055108709, ISSN: 0022-0302, DOI: 10.3168/jds.S0022-0302(02)74238-0
- JANA A H ET AL: "Manufacturing and quality of mozzarella cheese: a review.", INTERNATIONAL JOURNAL OF DAIRY SCIENCE, vol. 6, no. 4, 2011, pages 199-226, XP002721939, ISSN: 1811-9743

## Description

La présente invention concerne un procédé de fabrication d'un fromage ayant des propriétés d'étalement et/ou de filant à la cuisson, en particulier un procédé de fabrication mettant en oeuvre des concentrés protéiques laitiers en poudre.

### Arrière-plan de l'invention

La fabrication de fromage à partir de poudre de lait est bien connue. Cette façon de fabriquer des fromages est particulièrement avantageuse car elle permet de dissocier en temps et lieu la fabrication de fromages de l'approvisionnement en lait frais. Ceci rend possible notamment la production de fromage en fonction de la demande et/ou dans des régions ne bénéficiant pas de ressources laitières propres.

Les procédés connus de fabrication de fromage à partir de poudre de lait sont des procédés rapides permettant l'obtention de fromage en seulement quelques étapes : mélange de la poudre de lait à de l'eau, des solutions d'acides ou de matière grasse, ajout éventuel d'enzymes, chauffage du mélange résultant, ajout d'additifs divers. Généralement les fromages ainsi obtenus sont des fromages frais ou fondus.

Le document EP 1.788.884 B1 décrit cependant la fabrication d'un fromage de type traditionnel ou affiné mettant en oeuvre des concentrés protéiques laitiers appauvris en lactose évitant ainsi une étape de séparation du lactosérum formé.

On connaît également WO 2009/150183 A1 décrivant la fabrication de concentrés protéiques laitiers appauvris en calcium en utilisant un séquestrant du calcium ajouté au lait écrémé ou au perméat résultant de la microfiltration du lait écrémé, tel que l'acide citrique ou le citrate de sodium. Les concentrés protéiques en poudre ont ainsi des teneurs en calcium et en phosphates déterminées pour la préparation d'un pré-fromage liquide permettant que le phosphate de calcium, et donc le pH et la capacité tampon du fromage soient contrôlés à des niveaux qui ne conduisent pas à un développement important des cultures et donc à la formation d'un fromage amer. Les concentrés protéiques laitiers appauvris en calcium peuvent avoir une teneur en calcium sur la matière azotée totale (MAT) comprise entre 0,1% et 4%. La dernière valeur de 4% est très élevée et correspondrait à un concentré protéique laitier dont la valeur en calcium n'a pas été modifiée. En effet, le ratio en poids du calcium sur la MAT dans un concentré protéique laitier n'ayant subi aucune étape d'acidification pour libérer le calcium est normalement aux environs de 3% et plus.

WO 2009/150183 décrit également la fabrication de fromages qui seraient obtenus à partir de concentrés protéiques laitiers ayant subi l'ajout de séquestrant(s) du calcium lors de leur synthèse. Néanmoins, les deux fromages testés NCTP1 et NCTP2 ont des ratios en poids du calcium sur la MAT de 3,36% et 3,26% finales élevées ce qui correspondrait à l'emploi de concentrés protéiques laitiers dont la proportion en poids de calcium n'a pas été abaissée. En outre, la valeur d'étalement obtenue au tableau 4 pour un fromage ayant un extrait sec de 51% est de 116%. Cette valeur est faible, voire non significative puisque l'écart-type sur cette valeur est généralement de l'ordre de +/- 15%. Les fromages obtenus ne présentent donc pas des propriétés d'étalement satisfaisantes à extrait sec élevé.

WO 02/082917 A1 décrit la fabrication de concentrés protéiques laitiers dont la teneur en calcium a été modifiée et leur utilisation dans la fabrication de gels. L'exemple 10 ne porte pas sur la fabrication d'un fromage puisqu'aucune enzyme coagulante n'est ajoutée à la pâte. Seul de l'acide lactique en tant qu'agent acidifiant est ajouté à la pâte ce qui semble équivalent à une prise en masse telle celle obtenue pour un yaourt. En outre, la vitesse d'agitation est de 120 tours/minute, ce qui ne permet pas d'obtenir une bonne hydratation et une bonne mise en émulsion des protéines du lait. L'exemple 10 fait ainsi référence à la consistance du produit obtenu et non à ses propriétés d'étalement et/ou de filant à la cuisson.

US 4.460.609 décrit la fabrication d'un fromage de type mozzarella à partir de concentrés protéiques laitiers dont la teneur en calcium n'a pas été modifiée et nécessitant une étape de séparation du lactosérum. Or la présente invention a pour but d'éviter toute étape de séparation.US 4.419.943 décrit la fabrication d'un fromage de type mozzarella à partir de concentrés protéiques subissant une étape d'acidification pour ajuster la proportion de calcium liée à la caséine afin d'effectuer des opérations distinctes ultérieures sur la caséine et les protéines du lactosérum, en particulier concentrer ces dernières et modifier les protéines du lactosérum par protéolyse.

US 4.419.943 décrit la fabrication d'un fromage à partir de concentrés protéiques laitiers dont la proportion de calcium sur la MAT, c'est-à-dire comprenant le calcium soluble et le calcium insoluble, n'a pas été modifiée.

### Objet et résumé de l'invention

La présente invention vise à proposer un procédé de fabrication d'un fromage ayant des propriétés d'étalement et/ou de filant à la cuisson, lesquelles peuvent être adaptées selon la composition du fromage en extrait sec, en gras/sec et matière azotée totale. La présente invention cherche ainsi à proposer un procédé permettant d'obtenir toute une gamme de valeurs en étalement et/ou filant à la cuisson dont certaines sont similaires à celles obtenues pour des fromages traditionnels.

La présente invention vise en particulier à l'obtention d'un fromage de type mozzarella à basse teneur en humidité, qui est un fromage homogène à pâte ferme/semi-dure sans trous, apte à être râper.

Selon les normes du CODEX, l'appellation stricte de mozzarella est réservée à des fromages ayant une teneur en matière grasse dans l'extrait sec supérieure ou égale à 45% et comprenant une teneur en matière sèche minimale de 45%. En général, le ratio en poids de la matière azotée totale dans une mozzarella traditionnelle est supérieur ou égal à 23%.

La mozzarella à basse teneur en humidité ne doit pas être confondue avec la mozzarella à haute teneur en humidité, laquelle est un fromage à pâte molle à couches superposées pouvant former des poches contenant du liquide d'apparence laiteuse. Cette mozzarella peut être conditionnée avec ou sans liquide. Ce fromage a une couleur blanc cassé.

Les définitions précédentes sont issues de la norme codex pour la mozzarella (codex stan 262-2006, amendé en 2006).

La présente invention vise un procédé de fabrication d'un fromage sans étape de séparation du lactosérum.

La présente invention a pour objet un procédé de fabrication d'un fromage ayant des propriétés d'étalement et/ou de filant à la cuisson comprenant les étapes successives suivantes :
i) introduire, dans un mélangeur solide-liquide, une composition de base comprenant de l'eau, de la ou des matière(s) grasse(s) et des concentrés protéiques laitiers, la composition de base comprend au moins 15% en poids de son poids total en concentrés protéiques laitiers, au moins 40% en poids de son poids total en eau, et au moins 15% en poids de son poids total de matière(s) grasse(s) correspondant à la quantité de matière(s) grasse(s) ajoutée à l'étape i), et éventuellement après l'étape ii) ou après l'étape iii);
ii) faire fonctionner le mélangeur avec une vitesse d'agitation supérieure ou égale à 1500 tours/minute et à une température T1 comprise entre 35°C et 60°C, en sorte d'émulsionner et homogénéiser ladite composition, puis la désaérer sous vide, jusqu'à l'obtention d'une pâte homogène, émulsionnée et désaérée, ou mixe préfromage ;
iii) une étape de refroidissement de la pâte à une température T2 inférieure à la température T1, de préférence comprise entre 35°C et 55°C,
iv) une étape de coagulation au cours de laquelle, il est ajouté à la pâte refroidie une ou des enzyme(s) coagulante(s), et éventuellement un ou des ferment(s) d'acidification et/ou une ou des enzyme(s) aromatique(s) et de modification des propriétés rhéologiques et/ou un ou des ferment(s) producteur(s) d'arômes et/ou un ou des agent(s) acidifiant(s),
v) une étape de texturation de la pâte comprenant l'ajout à ladite pâte de vapeur d'eau ou d'eau chaude à une température T3 supérieure ou égale à 45°C et des étapes de filage et d'étirage, notamment après l'ajout de vapeur d'eau ou d'eau chaude à la pâte obtenue à l'issue de l'étape de coagulation iv), et comprenant éventuellement une étape de broyage de la pâte effectuée préalablement à l'étape v),
vi) une étape de moulage / démoulage, et en ce que ledit procédé ne comprend pas d'étape de séparation du lactosérum formé après l'étape de coagulation iv), et en ce que le rapport entre le poids du calcium et le poids en matière azotée totale (Ca/MAT) dans lesdits concentrés protéiques laitiers est supérieur ou égal à 1,20% ou inférieur ou égale à 2,80%.

De préférence, selon la définition du CODEX Alimentarius, les protéines du lait sont définies comme des produits laitiers contenant un minimum de 50% de protéines du lait calculé en fonction de la matière sèche (Azote x 6.38). La matière azotée totale (MAT) comprend ainsi les protéines du lait et la matière azotée non protéique.

Les concentrés protéiques laitiers utilisés dans le cadre de la présente invention peuvent être sous forme de poudre et/ou sous forme liquide.

De préférence, les concentrés protéiques laitiers sont sous forme de poudre lorsque l'on souhaite dissocier la synthèse desdits concentrés protéiques du lieu de leur utilisation, en particulier afin de faciliter leur stockage.

Dans la cadre de la présente invention, le calcium pris en compte dans le calcul du rapport Ca/MAT est celui du calcium total, c'est à dire comprenant le calcium soluble et le calcium insoluble lié aux protéines, en particulier à la caséine.

La teneur en calcium d'un produit laitier, notamment dans un concentré protéique laitier, peut être déterminée par spectrométrie d'absorption atomique selon la méthode FIL 119 (Fédération Internationale de Laiterie) - ISO 8070 (International Organization for Standardization) datant de 2007.

Avantageusement, la mise en oeuvre des différentes étapes précitées en respectant les critères de température, de vitesse d'agitation et de mise sous-vide combinée à l'utilisation de concentrés protéiques laitiers ayant un rapport calcium Ca/MAT dans un intervalle déterminé, permet de fabriquer des fromages ayant des propriétés d'étalement et/ou de filant améliorées, proches des fromages traditionnels, tel que par exemple la mozzarella.

Un des mérites de l'invention est de pouvoir fabriquer un fromage ayant des propriétés d'étalement et/ou de filant à la cuisson à partir de concentrés protéiques laitiers grâce à l'ajustement du ratio en poids Ca/MAT pour toute une gamme de fromages selon leurs extraits sec, gras/sec et la MAT.

De préférence, on comprend par le terme « à la cuisson », tout opération consistant à transformer le fromage en sorte qu'il s'étale et/ou ait du filant si on l'étire en l'exposant à une source de chaleur ; de préférence ladite source de chaleur est supérieure ou égale à 60°C, encore de préférence supérieure ou égale à 100°C, notamment supérieure ou égale à 150°C, plus particulièrement supérieure ou égale à 250°C.

De préférence, on comprend par propriété d'étalement à la cuisson, tout fromage ayant un étalement supérieur à 0%, en particulier supérieur ou égal à 20%, de préférence supérieur ou égal à 60%, encore de préférence supérieur ou égal à 120 %, sous l'application d'une chaleur de l'ordre 270°C pendant 6 minutes et trente secondes, en particulier selon la méthode décrite au paragraphe II ci-dessous.

De préférence, on comprend par propriété de filant à la cuisson, tout fromage ayant un filant supérieur ou égal à 20 cm, encore de préférence supérieur ou égal à 40 cm mesurée selon la méthode décrite au paragraphe I a) ou sous l'exposition d'une température de 270°C pendant 6 minutes et trente secondes, notamment tel que décrit au paragraphe I b).

La composition de base comprend au moins 15% en poids de son poids total (y compris l'eau), de préférence au moins 20% en poids de son poids total, et encore de préférence au moins 25% en poids de son poids total et au plus 40% en poids de son poids total, de concentrés protéiques laitiers, notamment en poudre.

La composition de base comprend au moins 40% d'eau, encore de préférence au moins 45% d'eau, exprimé en % du poids total de ladite composition de base, et encore de préférence au plus 60% d'eau, encore de préférence au plus 50% d'eau, exprimé en % du poids total de ladite composition de base.

La quantité de matière(s) grasse(s) totale ajoutée à la composition de base, et éventuellement après l'étape ii) ou après l'étape de refroidissement iii), représente au moins 15% en poids du poids total de la composition de base (y compris l'eau), encore de préférence au moins 20% en poids du poids total de la composition de base, et encore de préférence au plus 35% en poids du poids total de la composition de base.

Un des mérites de l'invention est de proposer un procédé de fabrication sans étape de séparation du lactosérum formé après l'étape de coagulation iv) indépendamment du ratio en poids de la MAT dans les concentrés protéiques laitiers. En effet, selon l'invention, aucune étape de séparation du lactosérum n'est nécessaire quand bien même les concentrés protéiques laitiers comprennent plus de 10% en poids de lactose par rapport à leur poids total. Dans ce dernier cas, il est possible d'ajuster l'extrait sec du fromage final selon les proportions en poids en eau, matières grasses et concentrés protéiques laitiers en poudre dans la composition de base.

De préférence, lors de l'étape de texturation, des étapes de filage et d'étirage sont effectuées sur la pâte. En particulier, les étapes de filage et d'étirage sont confondues. En effet, lorsque la pâte est étirée, elle est également filée.

De préférence de la vapeur d'eau est injectée à la pâte. On observe ainsi que les propriétés d'étalement et de filant à la cuisson sont améliorées comparativement à l'injection d'eau chaude.

On comprend par étape de broyage, dans le présent texte, toute étape consistant à découper en petits morceaux la pâte en vue de sa texturation ultérieure.

Le procédé selon l'invention comprend éventuellement une étape de salage (par exemple le saumurage) et/ou une étape d'affinage suite à l'étape de moulage (vi) / démoulage. Cette étape d'affinage ne correspond pas à une étape d'affinage au sens classique dans la fabrication des fromages de type traditionnel/affiné. En effet, l'affinage dans le cadre de la présente invention dure généralement au maximum un mois. En outre, les ferments ayant été détruits à l'étape de texturation v), cette étape n'a pas pour but de développer des arômes particuliers dans le fromage tel que cela est le cas pour les fromages traditionnels/affinés mais permet d'améliorer les fonctionnalités physiques du fromage, en particulier l'étalement et le filant à la cuisson.

La vitesse d'agitation de 1500 tours/minute indiquée à l'étape ii) est la vitesse d'agitation qui doit être impartie au mélange jusqu'à l'obtention d'une pâte homogène et désaérée, de préférence pendant au moins 5 minutes, encore de préférence pendant au moins 10 minutes, et encore de préférence pendant au moins 15 minutes.

Dans une variante de réalisation, le procédé selon l'invention comprend, après l'étape ii), notamment avant l'étape de traitement thermique, et/ou après l'étape de refroidissement iii), l'ajout de matière grasse, de préférence sous vide.

De manière surprenante, l'ajout de matière grasse après les étapes ii) et/ou iii), de préférence après l'étape ii), en particulier après l'étape iii), permet d'améliorer très significativement la valeur d'étalement du fromage comparativement à un fromage comprenant la même quantité de matière grasse mais ajoutée en une seule fois dans la composition de base à l'étape i).

L'ajout de la matière grasse après l'étape ii) et/ou après l'étape iii) doit être effectuée en sorte d'obtenir une pâte homogène, émulsionnée et désaérée.

La matière grasse est de préférence ajoutée à l'état fondue, particulièrement à une température supérieure ou égale à 45°C, notamment de l'ordre de 45°C.

La matière grasse est de préférence ajoutée sous agitation, en particulier à une vitesse d'agitation supérieure ou égale à 300 tours/min, encore de préférence supérieure ou égale à 500 tours/minute, et encore de préférence supérieure ou égale à 750 tours/minute.

Dans une variante de réalisation, la quantité en poids de matière grasse ajoutée après l'étape ii) et/ou après l'étape iii) est supérieure ou égale à la quantité en poids de la matière grasse totale ajoutée à la composition de base à l'étape i), de préférence supérieure ou égale à deux fois la quantité en poids de matière grasse totale ajoutée à la composition de base à l'étape i).

L'étape de texturation v) comprend des étapes de filage et d'étirage, notamment après l'ajout de vapeur d'eau ou d'eau chaude à la pâte obtenue à l'issue de l'étape de coagulation iv).

Dans une variante, le procédé comprend une étape de malaxage au cours de laquelle la pâte est mélangée à l'aide d'un système d'agitation, par exemple à l'aide d'une vis. Ladite étape de malaxage a lieu de préférence avant l'étape de texturation v), et avant ou après l'étape de broyage.

Dans une variante, le rapport du poids du calcium sur le poids de la MAT dans les concentrés protéiques laitiers est compris entre 1,70% et 2,70%.

Avantageusement, les ratios en poids Ca/MAT permettent de fabriquer des fromages ayant des propriétés d'étalement et de filant à la cuisson, et ce très proches, voire similaires, à celles des fromages traditionnels mais permettent aussi d'obtenir des caractéristiques d'étalement et de filant selon les exigences des consommateurs.

De préférence, le rapport Ca/MAT est compris entre 1,70% et 2,50%, encore de préférence entre 1,70% et 2,30%.

Dans une variante, l'étape de coagulation iv) comprend l'acidification de ladite pâte refroidie à un pH supérieur ou égal à 5,10 et inférieur ou égal à 5,40.

L'acidification peut être effectuée à l'aide d'un ou des agents acide(s) tel(s) que décrit(s) ci-dessous.

Dans une variante, les concentrés protéiques laitiers en poudre comprennent moins de 10% en poids de lactose par rapport à leur poids total.

La faible teneur en lactose a pour avantage d'éviter tout brunissement à la cuisson du fromage.

Dans une variante, la MAT représente au moins 50% en poids et au plus 85% en poids du poids total des concentrés protéiques laitiers en poudre.

De préférence, la MAT représente au moins 60% en poids du poids total des concentrés protéiques laitiers en poudre.

Dans une variante, le mix préfromage présente un taux de matière sèche de 40% à 65%, de préférence de 45% à 55%.

Un des mérites de l'invention est de pouvoir faire varier les taux de matières sèches tout en obtenant des propriétés de filant et d'étalement satisfaisantes à la cuisson.

De préférence, le taux de matière sèche est compris entre 47% et 53%.

Dans une variante, le procédé selon l'invention comprend l'ajout de sel lors de l'étape (i), et/ou de l'étape (ii) et/ou de l'étape (iii) et/ou de l'étape de broyage et/ou de l'étape de texturation (v), et éventuellement lors d'une étape de saumurage.

Dans une variante, les concentrés protéiques laitiers présentent un ratio caséine/MAT en poids supérieur à 0,50, de préférence supérieur à 0,70, encore de préférence supérieur à 0,80 et inférieur à 0,95, et encore de préférence entre 0,85 et 0,95.

Dans une variante, le ratio MAT/eau en poids de la composition de base est compris entre 0,20 et 0,90, de préférence entre 0,30 et 0,90, encore de préférence entre 0,30 et 0,70, plus particulièrement entre 0,40 et 0,60.

Dans une variante, le ou les agents acide(s) sont choisis parmi les acides suivants : les acides chimiques, tels que l'acide chlorhydrique, l'acide sulfurique, l'acide phosphorique, l'acide lactique, l'acide citrique, l'acide acétique ; les acides biologiques tel que la glucono delta lactone.

Dans une variante, le ou les ferments d'acidification sont choisis parmi les ferments lactiques homofermentaires et/ou hétérofermentaires, les ferments thermophiles et/ou mésophiles.

Dans une variante, la ou les enzymes coagulantes sont choisies parmi la chymosine et/ou la pepsine.

Dans une variante, la ou les enzyme(s) aromatique(s) et de modification des propriétés rhéologiques sont choisies parmi une protéase et/ou une lipase.

Dans une variante, la composition de base comprend des agents de texture, notamment des hydrocolloïdes, telles que des protéines, en particulier de la gélatine et/ ou un ou plusieurs polysaccharide(s), et de l'amidon.

Dans une variante, la matière grasse est une matière grasse butyrique et/ou végétale, de préférence la matière grasse butyrique est choisie seule ou en combinaison parmi la crème, le beurre, l'huile de beurre ou la matière grasse laitière anhydre.

Optionnellement, la matière grasse végétale est choisie seule ou en combinaison parmi l'huile de palme, l'huile de coco, l'huile de coprah, l'huile de soja, l'huile de tournesol, sous forme liquide ou partiellement ou totalement hydrogénée. Dans ce dernier cas, il convient de noter que le produit résultant du procédé selon l'invention ne peut être commercialisé sous l'appellation de fromage.

Dans une variante, le procédé selon l'invention comprend une étape de refroidissement à l'issue de l'étape de texturation à l'aide d'eau froide et/ou d'eau glacée.

De préférence, cette étape de refroidissement est effectuée après l'étape de moulage (vi)et/ou démoulage.

De préférence, le refroidissement est effectué à l'aide d'eau froide ayant une température comprise entre 2°C et 6°C, encore de préférence de l'ordre de 4°C. De préférence, le refroidissement à l'aide d'eau froide est suivi d'un refroidissement à l'aide d'eau glacée (c'est à dire de l'ordre de 0°C).

Dans une variante, le procédé selon l'invention comprend une étape de traitement thermique à l'issue de l'étape ii), et avant l'étape iii), au cours de laquelle la pâte est soumise à une température supérieure ou égale à 65°C. Cette dernière étape consiste en une thermisation ou une pasteurisation de la pâte selon les températures atteintes.

L'invention a également pour objet un fromage de type mozzarella, tel que la mozzarella, obtenu notamment par la mise en oeuvre du procédé de fabrication selon l'invention et décrit selon l'une quelconque des variantes de réalisation précédentes, ayant des propriétés filantes et/ou d'étalement à la cuisson et ayant un rapport du poids de la MAT sur le poids total dudit fromage inférieure ou égale à 21%, un rapport du poids de la matière sèche par rapport au poids total dudit fromage supérieur ou égale à 40%, un rapport du poids du calcium sur le poids de ladite MAT compris entre 1,20% et 2,80%, et un rapport en poids de la matière grasse sur le poids sec du fromage compris entre 44% et 59%.

La teneur en MAT du fromage est calculée par rapport au poids total du fromage (y compris l'eau).

De préférence, la teneur en matière sèche est supérieure ou égale à 45%, encore de préférence supérieure ou égale à 47% et inférieure ou égale à 60%, encore de préférence inférieure ou égale à 55%, et encore de préférence inférieure ou égale à 53%.On entend par fromage de type mozzarella tout fromage ayant des propriétés de filant et/ou d'étalement à la cuisson, ayant une basse teneur en humidité, homogène à pâte ferme/semi-dure sans trous, et apte à être râper.

Un des mérites de l'invention est de permettre l'obtention d'un fromage ayant à la fois des teneurs en matière azotée totale plus faibles que les fromages issus de la technologie classique avec séparation de sérum et des propriétés de filant et/ou d'étalement à la cuisson, et en particulier de filant, à partir de concentrés protéiques laitiers, notamment en poudre.

Dans une variante, le pH dudit fromage est supérieur ou égal à 5,10 et inférieur ou égal à 5,40.

Dans une variante, le rapport du poids de la MAT sur le poids total du fromage est compris entre 15% et 21%, encore de préférence entre 17% et 21%.

Cette faible teneur en MAT représente un gain économique important sur le fromage comparativement à des MAT supérieure ou égale à 23%.

Le ratio en poids de la matière grasse sur le poids sec du fromage (gras/sec) est compris entre 44% et 60%, de préférence entre 44% et 59%.

### Brève description des dessins

La présente invention sera mieux comprise à la lecture des exemples de réalisation décrits ci-après, cités à titre non limitatif, et illustrés par les figures suivantes, annexées à la présente et dans lesquelles :

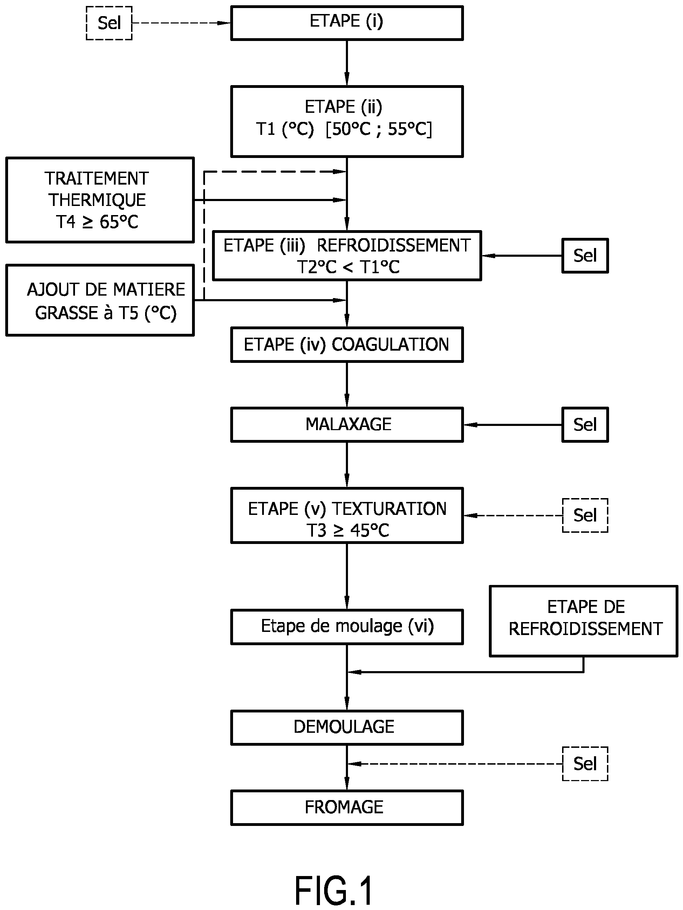

- la figure 1 représente de façon schématique les différentes étapes mises en oeuvre dans un premier exemple de procédé de fabrication selon l'invention ;

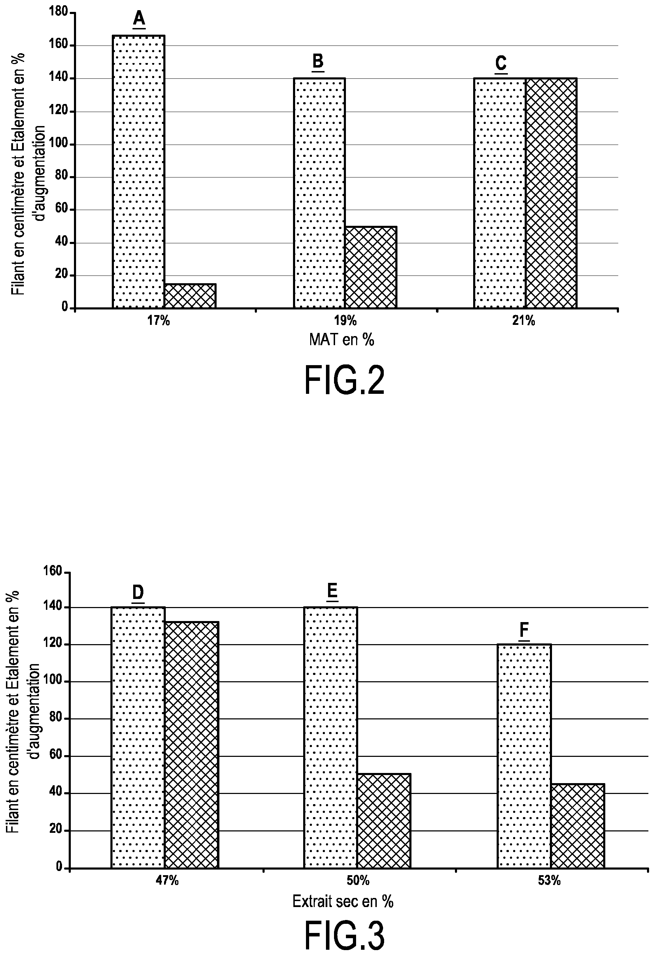

- la figure 2 est un graphique représentant les propriétés d'étalement et de filant à la cuisson mesurées sur des fromages obtenus par la mise en oeuvre du premier exemple de procédé selon l'invention. En ordonnée, sont représentées les valeurs de filant en centimètres et d'étalement en % d'augmentation par rapport aux dimensions de l'échantillon initial et, en abscisse, sont représentées les rapports du poids de la MAT dans un fromage testé sur le poids total dudit fromage ;
- la figure 3 est un graphique représentant les propriétés d'étalement et de filant à la cuisson mesurées sur des fromages obtenus par la mise en oeuvre du premier exemple de procédé selon l'invention. En ordonnée, sont représentées les valeurs de filant en centimètres et d'étalement en % d'augmentation par rapport aux dimensions de l'échantillon initial et, en abscisse, sont représentés les différents extraits secs des fromages testés (rapport du poids de la matière sèche sur le poids total du fromage);

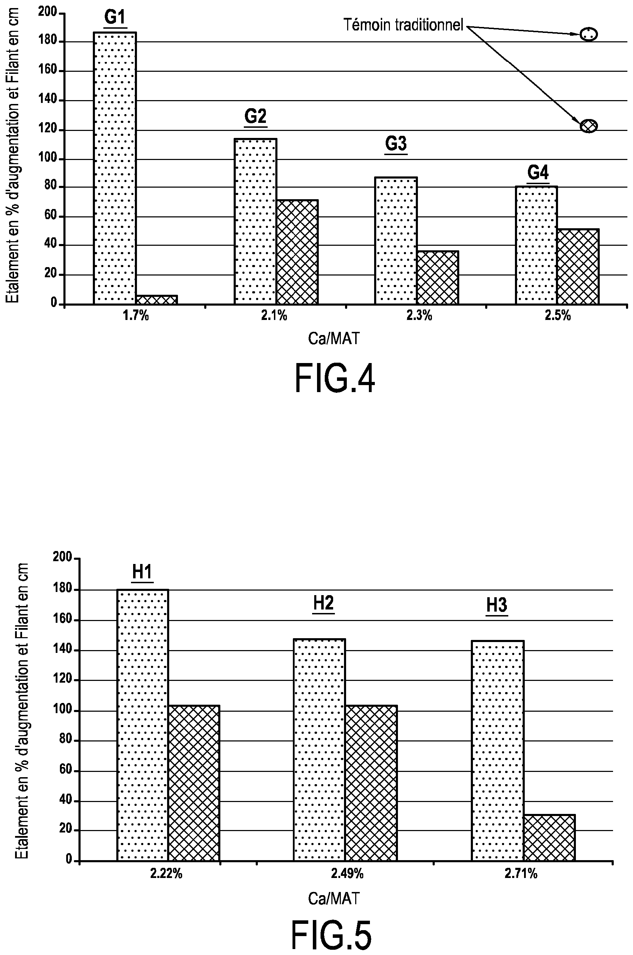

- la figure 4 est un graphique représentant les propriétés d'étalement et de filant à la cuisson mesurées sur des fromages obtenus par la mise en oeuvre d'un second exemple de procédé selon l'invention. En ordonnée, sont représentées les valeurs de filant en centimètres et d'étalement en % d'augmentation par rapport aux dimensions de l'échantillon initial et, en abscisse, sont représentés les rapports du poids de calcium sur le poids de la MAT dans les concentrés protéiques en poudre mis en oeuvre ;
- la figure 5 est un graphique représentant les propriétés d'étalement et de filant à la cuisson mesurées sur des fromages obtenus par la mise en oeuvre du second exemple de procédé selon l'invention. En ordonnée, sont représentées les valeurs de filant en centimètres et d'étalement en % d'augmentation par rapport aux dimensions de l'échantillon initial et, en abscisse, sont représentés les rapports du poids de calcium sur le poids de la MAT dans les concentrés protéiques en poudre mis en oeuvre ;

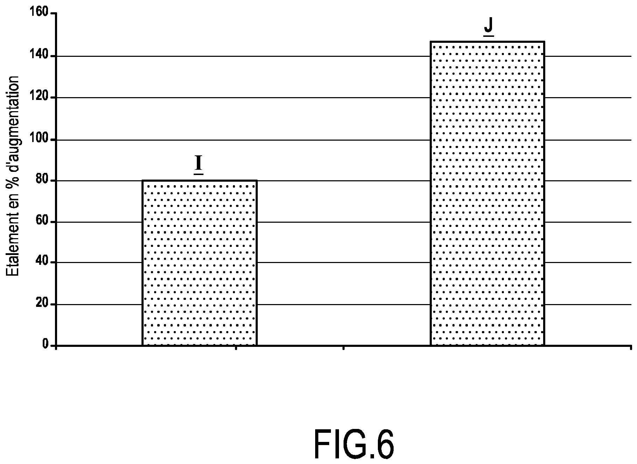

- la figure 6 est un graphique représentant les propriétés d'étalement à la cuisson mesurées sur des fromages obtenus par la mise en oeuvre de troisième et quatrième exemples de procédé selon l'invention. En ordonnée sont représentées les valeurs d'étalement en % d'augmentation par rapport aux dimensions de l'échantillon initial et, en abscisse, sont représentés un fromage I pour lequel toutes les matières grasses ont été ajoutées lors de l'étape i) et un fromage J pour lequel les matières grasses ont été ajoutées en deux fois, à savoir lors de l'étape i) et après l'étape iii).

Sur les figures 2 à 6, les histogrammes grisés comprenant des points correspondent à l'étalement mesurée en % d'augmentation et les histogrammes comprenant des hachures croisées correspondent au filant mesuré en cm.

Sur la figure 4 est représenté les valeurs d'étalement et de filant obtenues sur une mozzarella traditionnelle, indiquée sous l'appellation de Témoin traditionnel, ayant 50.6% d'extrait sec, 22.2% matière grasse par rapport à son poids total, 23% de MAT par rapport à son poids total et 40-45% de gras/sec.

### Description détaillée de l'invention

### I a) Exemple de description de la mesure du filant (cm)

Principe : Mesure de la longueur avant rupture du dernier fil de fromage fondu (principe de mesure inspiré de la machine test universelle Instron). Mesure par traction verticale d'un mobile-harpon placé dans le fromage.

Matériels : Machine de test « Filomètre », dotée d'une cuve thermostatée ; mobile Harpon composé de six branches, muni d'un disque plastique destiné à maintenir le harpon et à limiter l'évaporation ; béchers inox (50ml-70ml) de forme haute ; bain Marie à 90°C (+/-0.2°C) ; balance de précision.

### Mode Opératoire :

1- Peser dans un bêcher 17g (+/-0,01g) de fromage à tester moulu fraîchement ;
2- Introduire le harpon dans le bêcher sans tasser le fromage, la hauteur du harpon (disque-branches) est définie et fixe lors de la conception.
3- Placer le bêcher dans un bain-marie à 90°C pendant 10 minutes.
4- Ensuite, placer le bêcher dans la cuve du filomètre, thermostatée à 60°C, pendant 5 minutes.
5- Lecture manuelle ou automatique de la hauteur du mobile lors de la rupture du dernier fil de fromage fondu.
6- Procéder à trois mesures par fromage testé.

### Expression des résultats

Le filant correspond à la longueur du dernier fil de fromage lors de sa rupture (comprise entre 0 mm et 1200 mm).

L'écart-type de répétabilité est inférieur à 30 mm, soit un coefficient de variation inférieur à 15%. Cet exemple de mesure du filant a été employé pour tester les fromages G1 à G4 décrits en référence à la figure 4 et les fromages H1 à H3 décrits en référence à la figure 5.

Les fromages A à F, I et J décrits ci-après ont été testés à partir d'une méthode de mesure différant de la méthode décrite ci-dessus de par la quantité de fromage introduite dans chaque bécher, laquelle est de 30 g. Le fromage testé est râpé manuellement et non moulue. Un bêcher contenant chaque échantillon de fromage à tester est immergé dans un bain-marie pendant 4 minutes puis la tige déjà prédisposée dans le fond du bécher, est actionnée pour mélanger le fromage fondu. Les étapes 5 et 6 du mode opératoire ci-dessus sont ensuite effectuées.

Ib) La propriété de filant peut être également mesurée en reproduisant les différentes étapes de la méthode décrite au Ia) mais en chauffant à 270°C le bêcher à l'étape 3) pendant 6 minutes et trente secondes.

### II- Description de la mesure de l'étalement (%)

Principe : Evaluer comparativement, la capacité des fromages testés à s'étaler lors de leur fonte. Cette méthode consiste à mesurer l'étalement pour un échantillon de fromage cylindrique sur une grille après chauffage à une température et pendant un temps déterminés (270°C pendant 6 minutes et trente secondes).

Matériels : Découpoir rond en inox (diamètre de 30 mm) ; four à 270°C ; plaques en verres ; des pinces ; une feuille de mesure comportant un emplacement de forme circulaire destinée à recevoir l'échantillon de fromage découpé avant sa fonte, et duquel se projettent six axes gradués ; chronomètre, et un couteau.

### Préparation des échantillons :

1- Couper une tranche de fondu de 30 mm d'épaisseur.
2- Découper des cylindres à l'aide du découpoir en inox, trois cylindres par fromage à tester. S'assurer de l'homogénéité des échantillons de fromage (dimensions, forme,...).

### Mode Opératoire :

1- Mettre le four à chauffer à 270°C.
2- Prendre deux plaques en verre et glisser la feuille de mesure entre ces dernières et bloquer les plaques à l'aide des pinces.
3- Placer l'échantillon sur le cercle central de la feuille de mesure et mettre au four.
4- Chauffer six minutes et trente secondes à 270°C.
5- Sortir l'échantillon et laisser refroidir dix minutes avant lecture.
6- Noter la distance atteinte par l'échantillon sur les six points signalés sur les six axes gradués de la feuille de mesure.
7- Répéter la mesure trois fois.

Résultats : La moyenne des six points mesurés sur les six axes gradués est effectuée, le résultat est la moyenne des trois répétitions.

### III- Description de plusieurs exemples de procédés de fabrication selon l'invention

### 1.Variation du taux de Matière Azotée Totale (MAT) sur un fromage de type mozzarella à 50% d'extrait sec, et 44% de gras/sec, avec un rapport en poids de calcium /MAT de 2.00 %

**Tableau 1**

| Composition de base | Fromage A | Fromage B | Fromage C |
|---|---|---|---|
| Eau (Kg) | 29.22 | 29,22 | 28,74 |
| Matière grasse : matière grasse laitière anhydre (Kg) | 13.5 | 13,56 | 13,68 |
| Concentré protéique laitier (Kg) | 16.5 | 16,44 | 16,8 |
| Sel (Kg) | 0,78 | 0,78 | 0,78 |
| Poids total (Kg) | 60,06 | 60,00 | 60,00 |
| rapport du poids de la MAT sur le poids total du concentré protéique laitier (%) | 65 | 70 | 75 |
| Rapport du poids de la MAT (%) sur le poids total du fromage | 17,90 | 19.2 | 21 |
| Matière(s) grasse(s) totales (g)/fromage sec (poids) (%) | 43.8 | 44 | 43.8 |
| Rapport du poids en calcium sur le poids de la MAT dans les concentrés protéiques laitiers | 2,01% | 2,06% | 2,09% |

Les trois compositions de base décrites au tableau 1 ci-dessus et correspondant aux fromages A, B et C, sont mises en oeuvre selon un premier exemple de procédé selon l'invention, décrit ci-après et en référence à la figure 1. L'eau est introduite dans un mélangeur sous vide, par exemple un mélangeur de marque Almix (STM 100 Scanima turbo mixer Tetra Pak), puis le chauffage en double enveloppe à une température de l'ordre de 50°C est actionné avec une vitesse d'agitation à 710 trs/min. Une partie de la matière grasse laitière anhydre extra blanche fondue, soit environ un tiers de la quantité de matière grasse totale ajoutée audit fromage, est ajoutée sous-vide dans le mélangeur à une température de l'ordre de 50°C avec une vitesse d'agitation à 710 trs/min, puis le mélange de concentrés protéiques laitiers en poudre est injecté dans le mélangeur sous-vide à une vitesse d'agitation de 1500 trs/min, pendant 15 minutes pour la formation d'une pâte homogène, désaérée et émulsionnée, également appelée mix préfromage. La température du mélange T1 reste comprise entre 50°C et 55°C lors de cette étape ii). La pâte obtenue subit alors un traitement thermique à une température T4 de 65°C dans ledit mélangeur Almix double enveloppe, avec une vitesse d'agitation de 1500 trs/min, puis une étape de refroidissement iii) à une température T2 de l'ordre de 45°C et une vitesse d'agitation de 1000 trs/min. La deuxième partie de la matière grasse laitière anhydre extra blanche fondue, soit environ deux tiers de la matière grasse totale ajoutée au fromage, est ajoutée sous vide à la pâte à une température T5 de 45°C et une vitesse d'agitation de 1000 tours/min. Les ferments Chr HANSEN, STEM 05 (12 g), LHB01 (6 g), et de la présure Chymax (6,6g) sont ensuite ajoutés à la pâte à l'étape iv) de coagulation. La pâte ainsi additionnée est mélangée à une vitesse d'agitation de 1000 trs/min pendant 1 minute, puis 30Kg de cette pâte sont conditionnés dans un batch. Une acidification à 47°C est alors effectuée sur la pâte conditionnée pour la formation d'un caillé jusqu'à l'obtention d'un pH de 5.20, puis les 30Kg de caillé sont introduits dans un mélangeur cuiseur sous vide de laboratoire, tel que le Karl Schnell 30 kg, type 770 pour subir une étape de filage. Le caillé est malaxé pendant 1 minute, adjuvé de 450 g de sel, à une vitesse de rotation de 100 trs/min. Le caillé subit ensuite une étape de texturation (v) au-cours de laquelle il est chauffé à 64°C avec injection directe de vapeur puis malaxé pendant 4 min à l'aide d'une vis tournant à 100 trs/min. La pâte est ensuite étirée/filée pendant 1 minute. On observe alors une masse blanche homogène et brillante. La pâte est alors moulée, étape (vi), dans des moules de forme cylindrique de diamètre 80 mm et de hauteur 240 mm puis refroidie pendant 30 minutes en eau glacée puis à 4°C en eau froide. Après 30 jours de stockage à 4°C, on obtient les résultats illustrés sur le graphique de la figure 2.

Il n'y a pas d'étape de séparation du lactosérum.

La figure 1 représente en trait plein les différentes étapes du premier exemple de procédé selon l'invention. Les traits en pointillés représentent des variantes dudit premier exemple de procédé, le sel peut ainsi être ajouté à l'étape i) et/ou l'étape iii) et/ou à l'étape v) et/ou après l'étape de démoulage. La deuxième partie de la matière grasse peut être ajoutée à l'issue de l'étape ii), de préférence avant l'étape de traitement thermique.

A la lecture de ce graphique, on observe des propriétés de filant proches de 20 cm au minimum pour le fromage A et allant jusqu'à 140 cm pour le fromage C. Les propriétés d'étalement sont satisfaisantes dans tous les cas, mais optimisées pour un teneur en matière azotée totale de 17,90%. Ces résultats avantageux ont été obtenus pour les fromages A, B et C pour des rapports en poids calcium/MAT compris entre 2,01% et 2,09%.

### 2. Variation de l'extrait sec total sur un fromage de type mozzarella ayant 19% en poids de son poids total de MAT, 45% de matière(s) grasse(s) (g)/ fromage sec (g) avec un rapport en poids de calcium /MAT de 2,00 %.

**Tableau 2**

| Composition de base | Fromage D | Fromage E | Fromage F |
|---|---|---|---|
| Eau (Kg) | 31,08 | 29,22 | 27,42 |
| Matière grasse : matière grasse laitière anhydre (Kg) | 12,78 | 13,56 | 14,28 |
| Concentré protéique laitier (Kg) | 15,30 | 16,44 | 17,58 |
| Sel (Kg) | 0,84 | 0,78 | 0,72 |
| Poids total (Kg) | 60,00 | 60,00 | 60,00 |
| Ratio en poids de la MAT dans le concentré protéique laitier (%) | 73,00 | 68,00 | 64,00 |
| Ratio en poids calcium / MAT dans le concentré protéique laitier | 2,00% | 1,96% | 1,97% |
| Matière sèche totale / poids total du fromage (extrait sec) | 47% | 50% | 53% |

Les trois compositions de base décrites au tableau 2 ci-dessus et correspondant aux fromages D, E et F, sont mises en oeuvre selon le premier exemple de procédé selon l'invention (avantageusement sans étape de séparation du lactosérum), décrit ci-dessus en référence pour les fromages A, B et C. Après 30 jours de stockage à 4°C, on obtient les résultats représentés au graphique de la figure 3.

On observe ainsi que le fromage D ayant un extrait sec de 47% présente les meilleures propriétés d'étalement (140%) et de filant (environ 130 cm). La valeur de filant diminue avec l'augmentation de l'extrait sec.

### 3. Description d'un second exemple de procédé de fabrication selon l'invention pour la préparation d'un fromage de type mozzarella.

Le second exemple de procédé de fabrication diffère du premier exemple de procédé de fabrication décrit ci-dessus de par le rapport en poids du calcium sur la MAT dans les concentrés protéiques laitiers et les quantités en eau, en matière grasse et en concentrés protéiques laitiers dans la composition de base à l'étape i). La composition de base comprend ainsi 29,22 Kg d'eau, 16,50 Kg de concentrés protéiques laitiers en poudre ayant un rapport en poids de 78.5% de matière azotée totale, et une teneur en lactose inférieure ou égale à 10%. La matière grasse laitière anhydre (MGLA) extra blanche est ajoutée fondue en deux fois tel que décrit dans le premier exemple de procédé de fabrication, 4,50 Kg de MGLA sont ajoutés à l'étape i) et 9,0 Kg de MGLA sont ajoutés sous-vide après l'étape de refroidissement iii) à une température T5 de 45°C, dans cet exemple précis égale à la température T4 de refroidissement.

Après 30 jours de stockage à 4°C, on obtient les résultats illustrés sur le graphique de la figure 4 et le graphique de la figure 5. La composition de base pour les fromages H1, H2 et H3 représentés à la figure 5 diffère de la composition de base décrite ci-dessus et destinée aux fromages G1 à G4 en ce qu'elle comprend davantage d'eau et de matière grasse.

Il n'y a pas d'étape de séparation du lactosérum.

Le graphique de la figure 4 représente les propriétés d'étalement et de filant à la cuisson obtenus pour des fromages G1, G2, G3 et G4 fabriqués avec des concentrés protéiques ayant respectivement des rapports en poids calcium sur MAT de 1,7% ; 2,1% ; 2,3% et 2,5% pour un extrait sec de 50% et un rapport gras/sec de 45%.

On remarque que l'étalement est favorisée avec des rapports calcium/MAT de 2,10% et moins, en particulier de l'ordre de 1,70% pour lequel la valeur d'étalement obtenue est proche de celle obtenue pour la mozzarella traditionnelle (c'est-à-dire fabriquée à partir de produits laitiers frais usuels et non de concentrés protéiques laitiers, en particulier appauvris en lactose et en calcium), pour des fromages à 50% d'extrait sec, 45% de gras/sec et 21% de MAT.

Le graphique de la figure 5 représente les propriétés d'étalement et de filant à la cuisson obtenues pour des fromages H1, H2 et H3 fabriqués avec des concentrés protéiques ayant respectivement des rapports en poids calcium/MAT de 2,22% ; 2,49% et 2,71% pour un extrait sec de 46 %, une MAT de 19.5% et un rapport gras/sec de 48%. On remarque que l'étalement obtenu à 2,22% de Ca/MAT est proche de la valeur de la mozzarella traditionnelle, soit plus de 180%. En outre, le filant obtenu pour le fromage H2 ayant une teneur Ca/MAT de 2,49% atteint une valeur de filant de 120cm qui est très proche de celle de plus de 120cm environ obtenue pour la mozzarella traditionnelle testée et faisant office de témoin.

### 4. Troisième exemple de procédé de fabrication selon l'invention pour la préparation d'un fromage de type mozzarella I ayant un extrait sec de 48%, un rapport gras/sec de 50%, un rapport en poids calcium/MAT de 2,00%, un rapport du poids de la MAT sur le poids total du fromage de 19%.

Ce troisième exemple de procédé sera décrit ci-après de par ses différences avec le premier exemple de procédé décrit ci-dessus.

Ce troisième exemple de procédé diffère du premier exemple de procédé de par le rapport en poids du calcium sur la MAT dans les concentrés protéiques laitiers et les quantités en eau, en matière grasse et en concentrés protéiques laitiers dans la composition de base à l'étape i). La composition de base comprend ainsi 31,02 Kg d'eau, 14,60Kg de concentrés protéiques laitiers en poudre, ayant un rapport en poids caséine sur MAT de 90%, un rapport en poids de MAT de 81%, et une teneur en lactose inférieure à 10%. La matière grasse laitière anhydre (MGLA) extra blanche (9,0Kg) est ajoutée fondue en une seule fois à l'étape i) à une température T5 de 50°C.

Après 30 jours de stockage à 4°C, on obtient les résultats illustrés sur le graphique de la figure 6. Il n'y a pas d'étape de séparation du lactosérum.

### 5. Quatrième exemple de procédé de fabrication selon l'invention pour la préparation d'un fromage de type mozzarella J ayant un extrait sec de 48%, un rapport gras/sec de 50%, un rapport en poids calcium/MAT de 2,00%, et un rapport du poids de la MAT sur le poids total du fromage de 19%

Ce quatrième exemple de procédé sera décrit ci-après de par ses différences avec le premier exemple de procédé décrit ci-dessus.

Ce quatrième exemple de procédé diffère du premier exemple de procédé de par le rapport en poids du calcium sur la MAT dans les concentrés protéiques laitiers et les quantités en eau, en matière grasse et en concentrés protéiques laitiers dans la composition de base à l'étape i). La composition de base comprend ainsi 31,02 Kg d'eau, 14,60Kg de concentrés protéiques laitiers en poudre, ayant un rapport en poids caséine sur MAT de 90%, un rapport en poids de MAT de 81%, et une teneur en lactose inférieure à 10%. La matière grasse laitière anhydre (MGLA) extra blanche est ajoutée fondue en deux fois tel que cela est décrit dans le premier exemple de procédé de fabrication, 4,80 Kg de MGLA sont ajoutés à l'étape i) et 9,60 Kg de MGLA sont ajoutés sous-vide après l'étape de refroidissement iii) à une température T5 de 45°C, dans cet exemple précis égale à la température T4 de refroidissement. MAT/FROMAGE fini (eau) 19%

Après 30 jours de stockage à 4°C, on obtient les résultats illustrés sur le graphique de la figure 6. Avantageusement, il n'y pas d'étape de séparation du lactosérum.

On observe ainsi que l'ajout de la matière grasse en deux fois, en particulier l'ajout de matière grasse après l'étape de refroidissement, sous-vide et fondue, permet d'améliorer l'étalement de plus de 75%.

## Revendications

1. Procédé de fabrication d'un fromage ayant des propriétés d'étalement et/ou de filant à la cuisson **caractérisé en ce qu'**il comprend les étapes successives suivantes :
i) introduire, dans un mélangeur solide-liquide, une composition de base comprenant de l'eau, de la ou des matière(s) grasse(s) et des concentrés protéiques laitiers, la composition de base comprend au moins 15% en poids de son poids total en concentrés protéiques laitiers, au moins 40% en poids de son poids total en eau, et au moins 15% en poids de son poids total de matière(s) grasse(s) correspondant à la quantité de matière(s) grasse(s) ajoutée à l'étape i), et éventuellement après l'étape ii) ou après l'étape iii) ;
ii) faire fonctionner le mélangeur avec une vitesse d'agitation supérieure ou égale à 1500 tours/minute et à une température T1 comprise entre 35°C et 60°C, en sorte d'émulsionner et homogénéiser ladite composition, puis la désaérer sous vide, jusqu'à l'obtention d'une pâte homogène, émulsionnée et désaérée, ou mixe préfromage ;
iii) une étape de refroidissement de la pâte à une température T2 inférieure à la température T1, de préférence comprise entre 35°C et 55°C,
iv) une étape de coagulation au cours de laquelle, il est ajouté à la pâte refroidie une ou des enzyme(s) coagulante(s), et éventuellement un ou des ferment(s) d'acidification et/ou une ou des enzyme(s) aromatique(s) et de modification des propriétés rhéologiques et/ou un ou des ferment(s) producteur(s) d'arômes et/ou un ou des agent(s) acidifiant(s),
v) une étape de texturation de la pâte comprenant l'ajout à ladite pâte de vapeur d'eau ou d'eau chaude à une température T3 supérieure ou égale à 45°C et des étapes de filage et d'étirage, notamment après l'ajout de vapeur d'eau ou d'eau chaude à la pâte obtenue à l'issue de l'étape de coagulation iv). éventuellement une étape de broyage de la pâte effectuée préalablement à l'étape v),
vi) une étape de moulage / démoulage,
et **en ce que** ledit procédé ne comprend pas d'étape de séparation du lactosérum formé après l'étape de coagulation iv), et **en ce que** le rapport entre le poids du calcium et le poids en matière azotée total (Ca/MAT) dans lesdits concentrés protéiques laitiers est supérieur ou égal à 1,20 % et inférieure ou égale à 2,80 %.

2. Procédé de fabrication selon la revendication 1, **caractérisé en ce qu'**il comprend après l'étape ii), notamment avant l'étape de traitement thermique, et/ou après l'étape de refroidissement iii), l'ajout de matière grasse, de préférence sous vide.

3. Procédé de fabrication selon la revendication 2, **caractérisé en ce que** la quantité en poids de matière grasse ajoutée après l'étape ii) et/ou l'étape iii) est supérieure ou égale à la quantité en poids de la matière grasse totale ajoutée à la composition de base à l'étape i).

4. Procédé de fabrication selon l'une quelconque des revendications 1 à 3 , **caractérisé en ce que** le rapport entre le poids du calcium et le poids de la MAT dans les concentrés protéiques laitiers est compris entre 1,70% et 2,70%.

5. Procédé de fabrication selon l'une quelconque des revendications 1 à 4 , **caractérisé en ce que** l'étape de coagulation iv) comprend l'acidification de ladite pâte refroidie à un pH supérieur ou égal à 5,10 et inférieur ou égal à 5,40.

6. Procédé de fabrication selon l'une quelconque des revendications 1 à 5, **caractérisé en ce que** les concentrés protéiques laitiers en poudre comprennent moins de 10% en poids de lactose par rapport à leur poids total.

7. Procédé de fabrication selon l'une quelconque des revendications 1 à 6 , **caractérisé en ce que** le mix préfromage présente un taux de matière sèche de 40% à 65%, de préférence de 45% à 55%.

8. Procédé de fabrication selon l'une quelconque des revendications 1 à 7 , **caractérisé en ce que** les concentrés protéiques laitiers présentent un ratio caséine/MAT en poids supérieur à 0,50, de préférence supérieur à 0,60, et encore de préférence supérieur à 0,70.

9. Procédé de fabrication selon l'une quelconque des revendications 1 à 8 , **caractérisé en ce qu'**il comprend une étape de refroidissement à l'issue de l'étape de texturation (v) à l'aide d'eau froide et/ou d'eau glacée.

10. Procédé de fabrication selon l'une quelconque des revendications 1 à 9 , **caractérisé en ce qu'**il comprend une étape de traitement thermique à l'issue de l'étape ii), et avant l'étape iii), au cours de laquelle la pâte est soumise à une température supérieure ou égale à 65°C.

11. Fromage de type mozzarella, tel que la mozzarella, obtenu par la mise en oeuvre du procédé de fabrication selon l'une quelconque des revendications 1 à 10 , ayant des propriétés de filant et/ou d'étalement à la cuisson **caractérisé en ce qu'**il présente un rapport du poids de la MAT sur le poids total dudit fromage inférieure ou égale à 21%, un rapport du poids de la matière sèche par rapport au poids total dudit fromage supérieure ou égale à 40%, un rapport entre le poids du calcium sur le poids de la MAT dans ledit fromage compris entre 1,20 % et 2,80%, et un rapport en poids de la matière grasse sur le poids sec du fromage compris entre 44% et 59%.

12. Fromage de type mozzarella selon la revendication 11 **caractérisé en ce qu'**il a un pH supérieur ou égal à 5,10 et inférieur ou égal à 5,40.

## Patentansprüche

1. Verfahren zur Herstellung eines Käses mit Ausbreitungs- und/oder fädenziehenden Eigenschaften beim Garen, **dadurch gekennzeichnet, dass** es die folgenden aufeinanderfolgenden Schritte umfasst:
i) Einführen einer Basiszusammensetzung, die Wasser, Fett oder Fette und Milchproteinkonzentrate umfasst, in einen Feststoff-Flüssigkeits-Mischer, wobei die Basiszusammensetzung mindestens 15 Gew.-% ihres Gesamtgewichts Milchproteinkonzentrate, mindestens 40 Gew.-% ihres Gesamtgewichts Wasser und mindestens 15 Gew.-% ihres Gesamtgewichts Fett(e) umfasst, was der in Schritt i) und gegebenenfalls nach dem Schritt ii) oder nach dem Schritt iii) hinzugefügten Fettmenge entspricht;
ii) Einschalten des Mischers mit einer Rührgeschwindigkeit von über oder gleich 1500 Umdrehungen/Minute und bei einer Temperatur T1 zwischen 35°C und 60°C, so dass die Zusammensetzung emulgiert und homogenisiert wird, danach deren Entlüften im Vakuum, bis zum Erhalten eines homogenen, emulgierten und entlüfteten Breis oder Vorkäsemixes;
iii) einen Schritt des Kühlens des Breis auf eine Temperatur T2 unter der Temperatur T1, die vorzugsweise zwischen 35°C und 55°C liegt,
iv) einen Schritt des Koagulierens, bei dem dem gekühlten Brei ein koagulierendes oder koagulierende Enzym(e) und gegebenenfalls ein säuerndes oder säuernde Ferment(e) und/oder ein aromatisches oder aromatische Enzym(e) und zur Änderung der rheologischen Eigenschaften und/oder ein aromenerzeugendes oder aromenerzeugende Ferment(e) und/oder ein Säuerungsmittel oder Säuerungsmittel hinzugefügt werden,
v) einen Schritt des Texturierens des Breis, der das Hinzufügen von Wasserdampf oder warmem Wasser bei einer Temperatur T3 von über oder gleich 45°C zu dem Brei und Schritte des Fädenziehens und Streckens, insbesondere nach dem Hinzufügen von Wasserdampf oder von warmem Wasser zu dem Brei umfasst, der nach dem Schritt des Koagulierens iv) erhalten wurde, gegebenenfalls einen Schritt des Zerkleinerns des Breis, der vor dem Schritt v) durchgeführt wird,
vi) einen Schritt des Formens/Entformens,
und dass das Verfahren keinen Schritt des Trennens der nach dem Schritt des Koagulierens iv) gebildeten Molke umfasst, und dass das Verhältnis zwischen dem Gewicht des Kalziums und dem Gesamtgewicht des Rohproteins (Ca/MAT) in den Milchproteinkonzentraten größer oder gleich 0,10% und kleiner oder gleich 2,80% ist.

2. Herstellungsverfahren nach Anspruch 1, **dadurch gekennzeichnet, dass** es nach dem Schritt ii), insbesondere vor dem thermischen Behandlungsschritt, und/oder nach dem Kühlschritt iii) das Hinzufügen von Fett, vorzugsweise im Vakuum, umfasst.

3. Herstellungsverfahren nach Anspruch 2, **dadurch gekennzeichnet, dass** die Gewichtsmenge des nach dem Schritt ii) und/oder dem Schritt iii) hinzugefügten Fetts größer oder gleich der Gesamtgewichtsmenge des der Basiszusammensetzung in Schritt i) hinzugefügten Fetts ist.

4. Herstellungsverfahren nach einem der Ansprüche 1 bis 3, **dadurch gekennzeichnet, dass** das Verhältnis zwischen dem Gewicht des Kalziums und dem Gewicht des MAT in den Milchproteinkonzentraten zwischen 1,70% und 2,70% liegt.

5. Herstellungsverfahren nach einem der Ansprüche 1 bis 4, **dadurch gekennzeichnet, dass** der Schritt des Koagulierens iv) die Säuerung des gekühlten Breis auf einen pH von über oder gleich 5,10 und von unter oder gleich 5,40 umfasst.

6. Herstellungsverfahren nach einem der Ansprüche 1 bis 5, **dadurch gekennzeichnet, dass** die Pulver-Milchproteinkonzentrate unter 10 Gew.-% Laktose im Verhältnis zu ihrem Gesamtgewicht umfassen.

7. Herstellungsverfahren nach einem der Ansprüche 1 bis 6, **dadurch gekennzeichnet, dass** der Vorkäsemix einen Trockenmassegehalt von 40% bis 65%, vorzugsweise von 45% bis 55% aufweist.

8. Herstellungsverfahren nach einem der Ansprüche 1 bis 7, **dadurch gekennzeichnet, dass** die Milchproteinkonzentrate ein Gewichtsverhältnis Kasein/MAT über 0,50, vorzugsweise über 0,60 und noch vorzugsweiser über 0,70 aufweisen.

9. Herstellungsverfahren nach einem der Ansprüche 1 bis 8, **dadurch gekennzeichnet, dass** es nach dem Schritt des Texturierens (v) einen Kühlschritt mit Hilfe von kaltem Wasser und/oder von Eiswasser umfasst.

10. Herstellungsverfahren nach einem der Ansprüche 1 bis 9, **dadurch gekennzeichnet, dass** es nach dem Schritt ii) und vor dem Schritt iii) einen thermischen Behandlungsschritt umfasst, bei dem der Brei einer Temperatur von über oder gleich 65°C ausgesetzt wird.

11. Käse vom Typ Mozzarella wie Mozzarella, erhalten durch die Durchführung des Herstellungsverfahrens nach einem der Ansprüche 1 bis 10 mit Ausbreitungs- und/oder fädenziehenden Eigenschaften beim Garen, **dadurch gekennzeichnet, dass** er ein Gewichtsverhältnis MAT zum Gesamtgewicht des Käses von unter oder gleich 21%, ein Gewichtsverhältnis Trockenmasse zum Gesamtgewicht des Käses von über oder gleich 40%, ein Gewichtsverhältnis zwischen dem Gewicht des Kalziums zum Gewicht des MAT im Käse hat, das zwischen 1,20% und 2,80% liegt und ein Gewichtsverhältnis Fett zum Trockengewicht des Käses hat, das zwischen 44% und 59% liegt.

12. Käse vom Typ Mozzarella nach Anspruch 11, **dadurch gekennzeichnet, dass** er einen pH von über oder gleich 5,10 und unter oder gleich 5,40 hat.

## Claims

1. Method for producing a cheese having spreading and/or ropy properties when cooked **characterized in that** it comprises the following successive steps:
i) introducing, into a solid-liquid mixer, a base composition comprising water, fat and milk protein concentrates;
the base composition comprises at least 15% by weight of its total weight of milk protein concentrates, at least 40% by weight of its total weight of water, and at least 15% by weight of its total weight of fat(s) representing the quantity of fat(s) added in step i), and optionally after step ii) or after step iii);
ii) operating the mixer at a stirring speed greater than or equal to 1500 rpm and a temperature T1 between 35 °C and 60 °C, so as to emulsify and homogenize said composition, then deaerating same under vacuum, until a homogeneous, emulsified and deaerated dough, or pre-cheese mix, is obtained;
iii) a step of cooling the dough at a temperature T2 below temperature T1, preferably between 35 °C and 55 °C,
iv) a coagulation step during which one or more coagulating enzyme(s), and optionally one or more acidification ferment(s) and/or one or more aromatic enzyme(s) modifying rheological properties and/or one or more flavour-producing ferment(s) and/or one or more acidifying agent(s), are added to the cooled dough,
v) a step of texturing the dough comprising the addition to said dough of steam or hot water at a temperature T3 greater than or equal to 45 °C and spinning and stretching steps, notably after the addition of steam or hot water to the dough obtained at the conclusion of the coagulation step iv), optionally a step of grinding the dough carried out prior to step v),
vi) a moulding/unmoulding step,
and **in that** said method does not comprise a step of separating the whey formed after the coagulation step iv), and **in that** the ratio between the weight of calcium and the total nitrogenous matter (Ca/TNM) in said milk protein concentrates is greater than or equal to 1,20% and less than or equal to 2.80%.

2. Production method according to claim 1, **characterized in that** it comprises after step ii), notably before the heat treatment step, and/or after the cooling step iii), the addition of fat, preferably under vacuum.

3. Production method according to claim 2, **characterized in that** the quantity by weight of fat added after step ii) and/or step iii) is greater than or equal to the quantity by weight of the total fat added to the base composition in step i).

4. Production method according to any one of claims 1 to 3, **characterized in that** the ratio between the weight of the calcium and the weight of the TNM in the milk protein concentrates is between 1.70% and 2.70%.

5. Production method according to any one of claims 1 to 5, **characterized in that** the coagulation step iv) comprises the acidification of said cooled dough at a pH greater than or equal to 5.10 and less than or equal to 5.40.

6. Production method according to any one of claims 1 to 5, **characterized in that** the powdered milk protein concentrates comprise less than 10% by weight of lactose in relation to their total weight.

7. Production method according to any one of claims 1 to 6, **characterized in that** the pre-cheese mix has a dry matter content of 40% to 65%, preferably of 45% to 55%.

8. Production method according to any one of claims 1 to 7, **characterized in that** the milk protein concentrates have a casein/TNM weight ratio greater than 0.50, preferably greater than 0.60, and more preferably greater than 0.70.

9. Production method according to any one of claims 1 to 8, **characterized in that** it comprises a cooling step at the conclusion of the texturing step (v) using cold water and/or ice water.

10. Production method according to any one of claims 1 to 9, **characterized in that** it comprises a heat treatment step at the conclusion of step ii), and before step iii), during which the dough is subjected to a temperature greater than or equal to 65 °C.

11. Mozzarella-type cheese, such as mozzarella, produced by implementing the production method according to any one of claims 1 to 11, having ropy and/or spreading properties when cooked, **characterized in that** it has a ratio of the weight of the TNM to the total weight of said cheese of less than or equal to 21%, a weight ratio of dry matter to the total weight of said cheese of greater than or equal to 40%, and a weight ratio of calcium to the weight of the TNM in said cheese between 1,20% and 2.80%, and a weight ratio of fat to the dry weight of the cheese between 44% and 59%.

12. Mozzarella-type cheese according to claim 11, **characterized in that** it has a pH greater than or equal to 5.10 and less than or equal to 5.40.
